# EUROPEAN PATENT APPLICATION

(11) **EP 1 927 801 A2**
(43) Date of publication of application: **04.06.2008**
(21) Application number: 07254543.7
(22) Date of filing: 22.11.2007
(51) Int. Cl.: F16K 11/00

(54) **Fluid distribution apparatus**

(30) Priority: 01.12.2006 GB 0624011
(71) Applicant: Ameram Limited, 80 Haymarket London (GB)
(72) Inventor: Ross, Charles Michael, Bradford-on-Avon, Wiltshire BA15 2AG (GB)
(74) Representative: Shelley, Mark Raymond

(57) **Abstract**

Fluid distribution apparatus (200) of the type in which fluid arriving at an inlet (210) is delivered sequentially to a plurality of outlets (220), commutation of the delivery from one outlet to the next being effected by a pressure differential greater than a commutation threshold value provided across an activator member (300), in which there are provided means (415) for reducing the pressure differential across the activator member independently of any change in the pressure within the apparatus resulting from the pressure of the fluid arriving at the inlet.

## Description

This invention relates to fluid distribution apparatus and a method of operation thereof, slurry agitation apparatus, and a method of maintaining slurry in suspension in a slurry tank.

Due to relatively recent legislation in parts of the EU animal waste and the like must now be stored, so that it may be spread onto agricultural land at an appropriate time of year, rather than being spread onto land as and when it is produced. This is because if it is spread at an inappropriate time of year there is a risk that it will be washed into watercourses harming wildlife reliant on those watercourses. The stored material is known as slurry. An appropriate time of year for spreading the slurry onto agricultural land is at the end of the winter so that it may act as a fertiliser.

The volume of slurry collected during the year can amount to several hundred thousand gallons. This is stored in one or more slurry tanks which are typically sited above ground or partially buried in the ground. It is also possible to store slurry in slurry-cellars, which are typically located underground, however, for the purpose of this specification the term "slurry tank" will be used hereinafter to include all types of storage facility.

Such slurry tanks are typically circular in cross-section having a diameter of, for example, ten metres and a height of, for example, five metres. The waste material is pumped into the slurry tanks. However, once the slurry is in the tank, it needs to be agitated to prevent settlement and stratification and to improve the slurry for purposes of reuse at the end of the winter.

It is known to agitate the slurry in such slurry tanks by introducing compressed air via a plurality of inlets at the base of the tanks such that the air bubbles up through the slurry shaking, mixing and generally agitating it as it passes to the surface. The compressed air is supplied by a relatively small compressor run from the local electricity supply. Since most farms in the UK and Ireland typically only have a single-phase electricity supply such compressors are normally limited to a power rating of approximately three kilowatts. This relatively low power rating means that it is very difficult, if not impossible, to operate a compressor to provide a sufficient volume of pressurised air to serve several inlets simultaneously.

One way of overcoming this problem is to use a distribution apparatus to direct the air to one or more inlets simultaneously in each slurry tank. One way of distributing compressed air through a network of pipes uses solenoid valves controlled by a central control unit. However, such solenoid valves are relatively expensive, and not always flame-proof which, in a system dealing with methane producing slurry, may be dangerous.

Another way of distributing compressed air is described in UK patent application GB-A-2420398. This apparatus has a rotatable control plate, with at least one aperture, for directing the compressed air to different outlets in turn. The outlets are connected to the inlets at the base of the slurry tanks.

The plate is biased away from the outlets by a spring to improve its rotation, however, when compressed air is supplied to the apparatus the biasing strength of the spring is intentionally overcome by a pressure differential across the plate (between the inside of the apparatus and the outlets) such that the plate is forced against the outlets thus blocking all of them except the one adjacent the aperture. When this pressure differential is below a threshold value the biasing strength of the spring forces the plate away from the outlets thus allowing it to be rotated. The plate is rotated by means of a reciprocating piston driven by the same compressed air as is directed to the slurry tanks.

In use, compressed air is supplied to the distribution valve. As it travels into the distribution valve, some of the compressed air is diverted to the piston which activates and rotationally indexes the control plate so that the aperture within it is aligned with an outlet so that the air is directed to this outlet. The pressure differential across the plate will increase above a threshold value so that the plate is forced down against all of the other outlets thus blocking them. The air passes through the control plate, via the outlet, to one or more inlets in the slurry tank. After a predetermined time interval the supply of compressed air is temporarily stopped (for example by means a solenoid valve in the supply line) so that no compressed air flows through the distribution valve. The pressure differential between the inside of the apparatus and the inlets in the slurry tank will reduce such that the force applied to the control plate will be reduced. Accordingly, the force of the biasing spring will urge the control plate away from the outlets allowing the plate to be rotated. The piston will also return to its original state by means of a biasing element such as a spring. Then, after a predetermined time interval, the supply of fluid is reinstated so that compressed air again flows into the distribution valve. The steps described above are then repeated so that a different outlet is aligned with the aperture in the plate.

The problem with this system is that towards the end of the agricultural year when the slurry tanks are very full, the pressure required to force air out of the outlets at the base of the tank, thus overcoming the weight of slurry above, is relatively high. Accordingly, a relatively high pressure differential is created across the control plate within the distribution apparatus. This relatively high pressure differential does not fall below the threshold value required for the biasing means to force the plate away from the outlets, once the supply of air is suspended. Due to friction between the control plate and the outlets, it will not rotate once the supply of air has been reinstated, so that when this occurs, the plate remains stuck in one position and the compressed air only ever reaches the same outlet. Consequently the slurry is not correctly agitated. Other problems are also created by this high pressure being maintained in the apparatus.

The present invention seeks to overcome this problem and provide improved apparatus and methods of operation in the field of fluid distribution and slurry agitation.

In one aspect, the invention provides fluid distribution apparatus of the type in which fluid arriving at an inlet is delivered sequentially to a plurality of outlets, commutation of the delivery from one outlet to the next being effected by a pressure differential greater than a commutation threshold value provided across an activator member, in which there are provided means for reducing the pressure differential across the activator member independently of any change in the pressure within the apparatus resulting from the pressure of the fluid arriving at the inlet.

Although the term "fluid" and "compressed fluid" are used herein it is contemplated that in one embodiment these could be air and compressed air. Alternatively, or additionally, the fluid may be methane, or digester gas if the slurry is stored in a closed container.

The means for commuting the delivery of the supplied compressed fluid may include a control member turnable between successive different defined positions.

The means for reducing the pressure differential across the activator member may include a means for gradually reducing the pressure differential and a means for varying the rate of reduction of the pressure differential. The rate of reduction may be increased to reduce the pressure within the apparatus.

The means for varying the rate of reduction of the pressure differential may be a pressure release valve including an orifice in an external wall of the apparatus, a pressure release member movable between a position in which it substantially occludes the orifice, and a position in which the orifice is substantially unobstructed, and biasing means for biasing the pressure release member to the unobstructed position.

The pressure release member may be movable to the occluded position when a pressure differential across the pressure release member is above an occlusion threshold value.

The pressure release member may be movable to the unobstructed position when the pressure differential across the pressure release member is below a release threshold value.

The pressure release member may be pivotably movable or slidably movable.

The movement of the pressure release member to the obstructed position may be effected by movement of a vane provided in the inlet. This movement may be respective between the release member and the vane. This vane may be moved when the pressure differential across the vane is above the occlusion threshold value. This vane may be pivotable or slidable. The vane may be provided within the distribution apparatus so that the flow of compressed fluid will affect its movement as it passes. The vane may reciprocate between two positions. It may be biased towards one of these positions such as by means of either gravity or a spring.

The apparatus may include a pipe connected to the orifice at one end and extending inside the apparatus, wherein the pressure release member is engageable with the free end of the pipe within the apparatus thereby substantially to occlude it.

In one embodiment the vane and the activator member may be one and the same, or the vane may be connected to the activator member such that movement of the vane effects respective movement in the activator member.

The apparatus may include a set of teeth, wherein the control member is incrementally turned by engagement of the activator member with the teeth.

Alternatively, the apparatus may include two sets of opposing cams and a cam follower, wherein the control member is incrementally turned by relative motion between the two sets of opposing cams and cam follower.

The apparatus may include means for preventing the fluid reaching any of the outlets at least once per revolution of the control member. The means may be a resilient disc having an opening for permitting the fluid to reach each outlet in turn, the disc being located immediately adjacent the outlets. Such means may be provided by the lack of an outlet at one position such that the aperture does not align with an outlet. Alternatively, the outlet could be covered over or blanked off. A flow sensor provided in the supply pipe upstream of the distribution apparatus may detect a "no-flow condition" when the fluid is prevented from reaching any of the outlets. This information may be used for monitoring and recording the status of the apparatus and to provide reassurance that the control member is rotating since the "no-flow condition" should be detected once every x number of supply events where x is the number of rotational positions that the control member may occupy.

The disc may take the form of a 2mm thick flexible polycarbonate material. The biasing force applied by the spring may be overcome by the force applied to the other side of the disc provided by the pressure differential across it due to the pressure of the supplied fluid, above a further threshold value, when compressed fluid is supplied to the apparatus.

The control member may be, or may affect respective rotation of, a resilient disc having an aperture for permitting the fluid to reach each outlet in turn, the disc being located immediately adjacent the outlets.

This control member may be biased away from the outlets by resilient means, the means being held against the outlets when the pressure differential across the disc is above a further threshold value.

The rate of reduction of the pressure differential across the activator member may be adjustable.

The means for reducing the pressure differential across the activator member may be remote from the apparatus but associated with it. For example, a solenoid valve could be located within the housing of the apparatus or within the supply conduit such that when the valve is opened the pressure differential is reduced.

The means for gradually reducing the pressure differential across the activator member may include an imperfect seal between the movable member and the orifice so as to permit fluid to pass through the orifice from the entrance side to the exit side when the movable member is in the occluded position. Means may also be provided for adjusting the sealing effect of the sealing element so that the rate at which pressurised fluid is permitted to pass through the orifice, when the orifice is occluded, is adjustable. For instance, this may be achieved by providing a sealing element, such as an o-ring, and making this o-ring irregular in a certain way. Other ways of gradually reducing the pressure differential across the activator member are possible such as a simple bleed hole of defined dimensions.

An effect of having a sealing element which may not seal the orifice completely is that it will allow the pressure differential across the activator member to gradually reduce in circumstances where the supply of compressed fluid to the inlet end of the conduit has been suspended or has ceased. For instance, in a situation where one of the outlets is blocked and the pressure within the apparatus has risen to a relatively high level, whilst the compressed fluid is being supplied at the inlet end, the force provided by the biasing means may not be powerful enough to overcome the pressure differential created across the movable member occluding the orifice. However, if the pressure differential is allowed to reduce gradually via the imperfect seal then as soon as it has reduced to such an extent that the force it exerts on the movable member is less than the force exerted by the biasing means the movable member will be urged open by the biasing means. As soon as this occurs the rate of reduction of the pressure differential across the activator member will increase dramatically as the pressure within the apparatus is released via the pressure release valve.

In another aspect, the invention provides slurry agitation apparatus comprising a source of compressed gas, fluid distribution apparatus having any combination of features described herein, means for connecting the source of compressed gas to the fluid distribution apparatus, and means for varying the pressure of the supplied compressed gas, wherein the outlets from the fluid distribution apparatus are connectable to a plurality of inlets in a slurry tank so that, in use, the fluid distribution apparatus commutes the delivery of the compressed gas, upon each such variation in gas pressure between two threshold values, from one inlet to another, for agitation of the slurry in the slurry tank.

In a further aspect, the invention provides a method of operating a fluid distribution apparatus of the type in which fluid arriving at an inlet is delivered sequentially to a plurality of outlets, commutation of the delivery from one outlet to the next being effected by a pressure differential provided across an activator member greater than a commutation threshold value, comprising the steps of : supplying fluid to the apparatus via the inlet so as to increase the pressure differential across the activator member above the commutation threshold value so that the fluid is directed to at least one first outlet; temporarily suspending the supply of fluid to the inlet; reducing the pressure differential across the activator member independently of any change in pressure within the apparatus resulting from the temporary suspense of the supply of fluid to the inlet to allow it fall below a reset threshold value; and ending the temporary suspense of the supply of fluid to the apparatus via the inlet so as to increase the pressure differential across the activator member above the commutation threshold value so that the fluid is directed to at least one second outlet.

In one embodiment the step of reducing the pressure differential across the activator member is effected by gradually reducing the pressure differential across a pressure release member below a release threshold value so that a pressure release valve is opened thereby varying the rate of reduction of the pressure differential across the activator member.

In a yet further aspect, the invention provides a method of maintaining slurry in suspension in a slurry tank by means of slurry agitation apparatus described herein, the apparatus being operated in accordance with methods described herein.

The present invention and its advantages will be better understood from the following detailed description in which reference is made to the attached Figures, in which;
Figure 1 is a side view of one embodiment of a fluid distribution apparatus with the pressure release valve in the open position and the activator member in an initial, at-rest, position;
Figure 2 is a perspective view of a control member of a fluid distribution apparatus;
Figure 3 is perspective view of a drive element of a fluid distribution apparatus;
Figure 4 is a side view of the apparatus of Figure 1 with the pressure release valve in the closed position and the activator member in an activated position;
Figure 5 is a side view of the apparatus of Figures 1 and 4 with the activator member shown returning to the at-rest position;
Figure 6 is a cross-sectional side view of another embodiment of a pressure release valve in the closed position;
Figure 7 is a cross-sectional side view of the pressure release valve of Figure 6 in the open position;
Figure 8 is a cross-sectional side view of yet another embodiment of a pressure release valve in the closed position;
Figure 9 is a cross-sectional side view of the pressure release valve of Figure 8 in the open position;
Figures 10 to 12 are a sequence of perspective cut-away views of another fluid distribution apparatus; and
Figure 13 is a diagram indicating the elements comprising one embodiment of a slurry agitation apparatus.

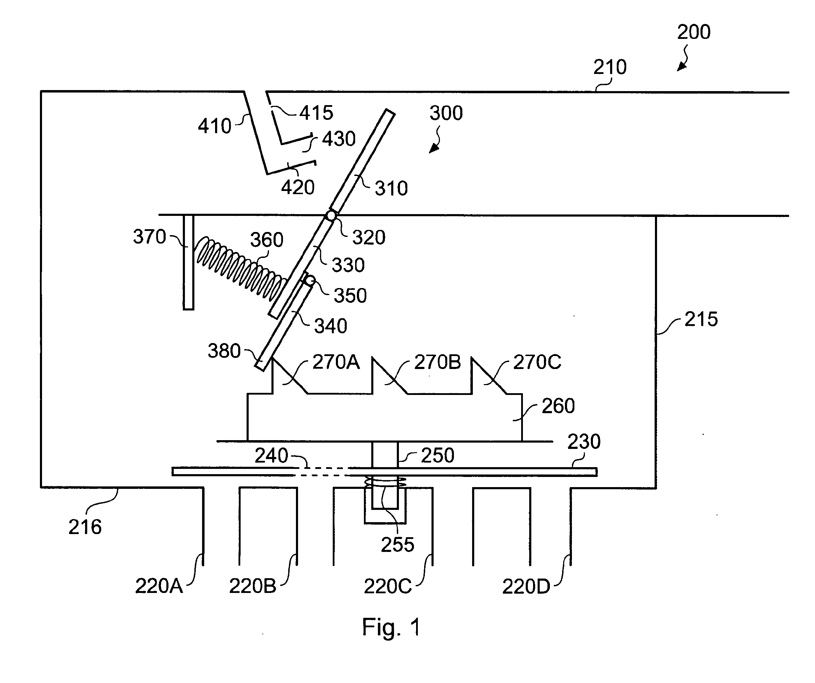

In Figure 1, the fluid distribution apparatus is generally indicated 200. It comprises an inlet conduit 210, a housing 215 having a base 216, and a plurality of outlets 220A, 220B, 220C, 220D. A control member or plate 230 is provided directly above the outlets 220. This control plate 230 has at least one aperture 240 provided therein and is rotatable about an axis 250 so that the aperture 240 may be variously located above each outlet 220 in turn. The plate 230 is biased away from the outlet by means of a spring 255.

Connected to, or associated with, the control plate 230 is a drive member 260 which is also rotatable around axis 250. The drive member 260 has a plurality of teeth, or cams, 270A, 270B, 270C provided thereon. Rotation of the drive member 260 rotates the control plate 230. Not all of the teeth 270 are visible in the Figure.

A reciprocating vane assembly (or activator member) generally indicated 300, is provided within the housing 215. This assembly 300 includes a vane 310, provided in the inlet 210, and pivoted to the apparatus at hinge point 320. An extension arm 330 is provided on the other side of the hinge from the vane 310 and is connected to the vane 310 such that movement of the vane 310 provides movement of the arm 330. Towards the end of the extension arm 330 an extension leg 340 is provided. This leg 340 is hinged to the arm at hinge point 350 and may be biased towards the arm 330 by a spring (not shown). However, because the hinge point 350 is provided on one side of the arm 330 at its approximate midpoint the leg 340 has limited movement with respect to the arm 330. This will be explained in more detail below. The extension arm 330 is biased to a fixing member 370 by means of a spring 360. This spring 360 biases the leg, and hence the vane assembly 300, in a particular direction and ensures that the end 380 of the leg 340, furthest from the hinge 320, is located behind one of the teeth 270 of the drive member 260.

A pressure release valve comprising an orifice in the side wall of the apparatus is provided. A pipe 410,420 extends inwardly into the inlet 210 from this orifice such that its open end 430 fluidly connects the inside and outside of the apparatus 200. A relatively small hole 415 is provided in the side of the pipe 410 which is intended to be permanently open so as to constantly and gradually equalise the pressure within the apparatus with that outside the apparatus 200, as will be discussed in more detail below.

The vane 310 may press against the open end 430 of the pipe 410,420 when it has been moved as will be described below.

The distribution apparatus 200 is shown in Figure 1 in a situation where the fluid pressure within the apparatus is equal at all points such that there is no force acting on the vane 310 other than that provided by the spring 360 which biases the vane assembly 300 into the at-rest, initial, position as shown. This situation may occur when no compressed fluid is supplied to the apparatus.

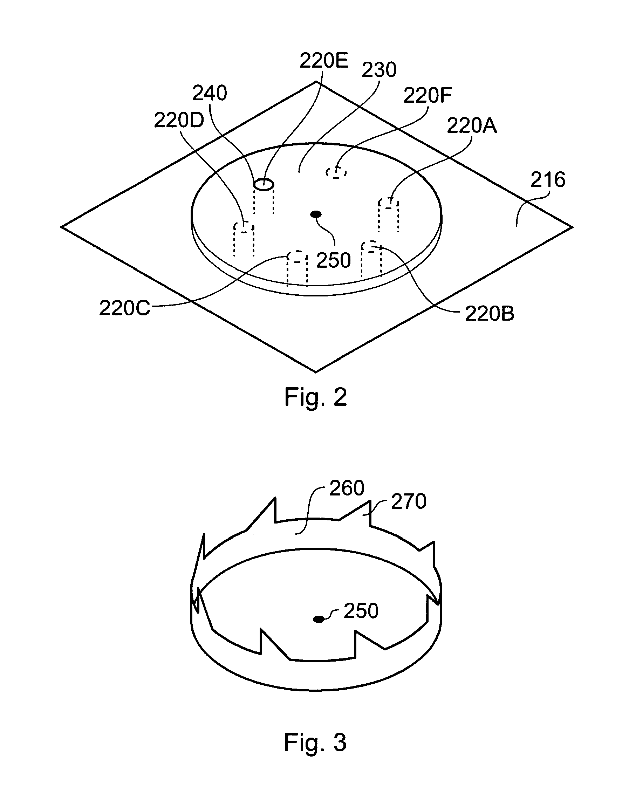

Figure 2 provides a view of the control plate 230 rotatably fixed to the base 216 of the housing 215 by axis 250. One aperture 240 is provided in the plate 230 and is shown in alignment with outlet 220E. Four other outlets, 220A, 220B, 220C, 220D are provided in the base 216. However, they are obscured by the plate 230 and are therefore shown in broken lines.

The drive member 260 is shown in Figure 3. It is a circular band rotatable about axis 250. It has a plurality of teeth 270 extending axially away from the edge of the band at its circumference. Each tooth 270 has a "fin" shape such that one side of the tooth extends parallel to the axis 250 away from the top of the band. This side only extends axially away from the top of the band for a certain distance before turning through approximately 130° and extending back to the top of the band on the other side of the tooth. The number of teeth 270 may be equal to the number of outlets plus one in the distribution apparatus. Alternatively, it could be equal to the number of outlets if one of these outlets is deliberately blocked off. This ensures that the control plate and its aperture 240 is rotated so that the aperture aligns with each outlet 220A,B,C,D,E in turn. In addition to aligning with each outlet 200A,B,C,D,E, the aperture 240 also aligns with a blank position (or blocked off outlet) 220F once every revolution of the plate 230. Further discussion regarding this event is provided below. Each outlet 220A,B,C,D,E and blank 220F are located equidistant from one another in a circle having its centre aligned with the axis 250 and a radius less than the radius of the plate 230.

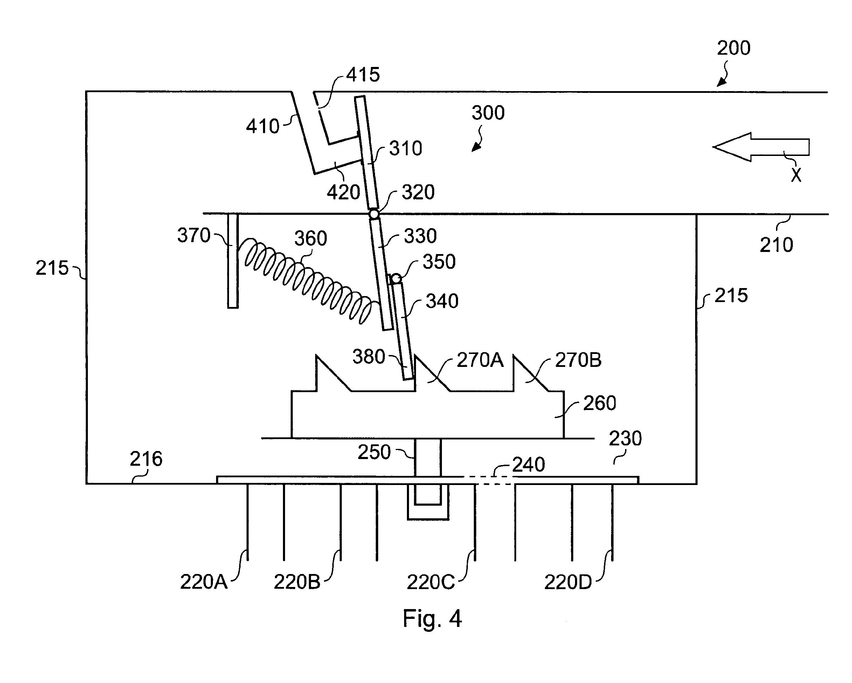

In Figure 4, compressed fluid is introduced into the fluid distribution apparatus 200 via inlet, or conduit, 210, as indicated by reference "X". A pressure differential is created across the sides of the vane 310 such that a force is created pushing the vane 310 so that it turns in an anti-clockwise manner about hinge point 320. As the vane 310 moves in this manner, the extension arm 330 is moved away from the fixing member 370 since the force on the vane 310 is greater than the force provided by the spring 360. As the extension arm 330 moves, the extension leg 340 is pushed along also. The end 380 of the leg 340 engages the tooth 270A and turns the drive member 260 about axis 250. In this manner, aperture 240 moves from outlet 220B to outlet 220C so that the compressed fluid will travel from the inlet 210 through the apparatus 200 and out of outlet 220C.

As the vane 310 pivots one face is pressed against the open end 430 of the pipe 410,420 thus substantially sealing the end closed. When this occurs the pressure within the apparatus 200 increases due to the supplied compressed fluid and possibly the effects of the back-pressure downstream of the apparatus. A pressure differential is then created across the vane 310 between the inside of the apparatus 200 and the inside of the pipe 410,420, since the pipe is connected to the outside of the apparatus, which may, in one embodiment, be the ambient atmosphere and thus at a lower pressure. This pressure differential exerts a force on the vane 310 holding it against the end 430 of the open pipe.

As the fluid pressure within the apparatus increases a pressure differential across the control plate 230 produces a force which is greater than that provided by the spring 255. The control plate 230 is thus forced against the resilient biasing spring 255 so that it seals all of the outlets 220 apart from the one with which the aperture 240 is aligned. In Figure 4 this is shown as outlet 220C.

In this manner, the supplied compressed fluid arrives at the inlet 210 of the apparatus 200 and travels past the vane 310, through the aperture 240 in the control plate 230 and out of the outlet 220C.

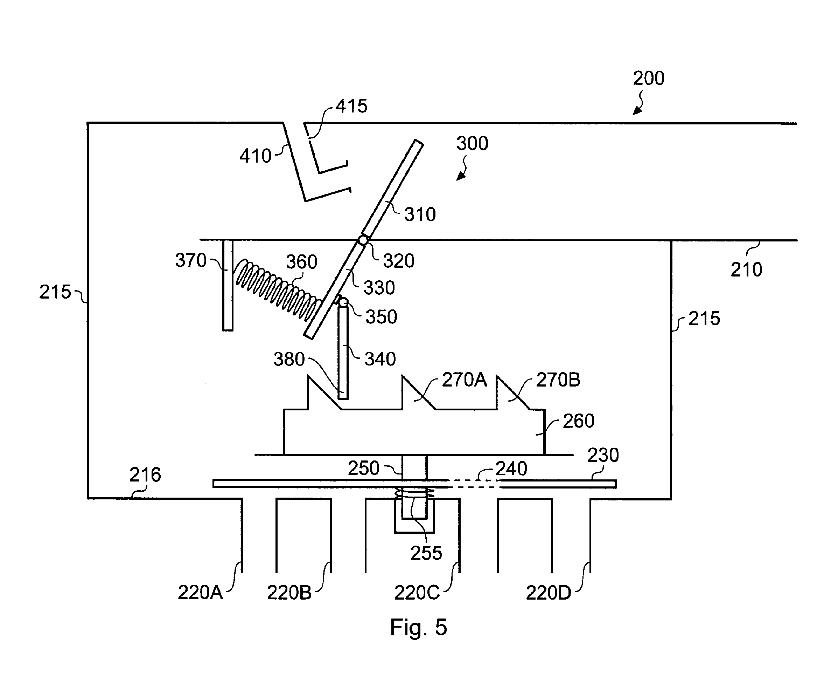

When the supply of compressed fluid to the apparatus is suspended, or ceased, the pressure differential across the vane 310 reduces. This is because the pressure within the apparatus 200 equalises on either side of the vane 310 due to the pressure within the apparatus reducing via outlet 220C and due to the absence of flow of compressed fluid past the vane 310 (which previously created a low pressure on the downstream side as compared to the upstream side). In this manner, the spring 360 pulls the extension arm 330 back towards the fixed member 370 as shown in Figure 5 as it applies a greater pressure than that created by the pressure differential across the vane 310..

The extension leg 340 is hinged to the extension arm 330 at hinge point 350. This allows the leg 340 to pivot about the hinge 350 such that the end 380 of the extension leg 340 passes over the teeth 270 of the drive member 260 without rotating the drive member 260. This effect is enhanced due to the teeth having a sloped surface, relative to the axis of the drive member 260, on one side.

In Figure 5 the apparatus is shown with the vane 310 returning to its fully biased position which is shown in Figure 1. In other words, when the vane 310 has moved fully back to its biased position, as shown in Figure 1, the end 380 of the extension leg 340 is located behind the next adjacent tooth 270 in readiness to drive it around axis 250 and thus move aperture 240 onto the next outlet 220, when compressed fluid is next supplied to the inlet 210. A spring, or other biasing means, may be required to ensure that the leg 340 follows the arm 330 back to its fully biased position such that the arm 330 and leg 340 are substantially parallel with one another. However, if the arm 330 reaches its fully biased position when it is parallel to the axis 250 there may be no need to bias the leg 340 towards the arm 330.

As the pressure differential across the control plate 230 reduces, due to a reduction in pressure within the apparatus 200, the force provided by the resilient spring 255 overcomes the force provided by the pressure differential and accordingly the control plate 230 is forced away from the outlets 220. This aids rotation of the control plate 230, upon the resupply of compressed fluid, as the friction provided by the base 216 of the apparatus 200 is reduced.

However, if the outlet to which the aperture 240 is connected is substantially blocked downstream, such that the compressed fluid may not easily flow out of the outlet 220, the pressure within the apparatus 200 may increase to such a level that when the supply of compressed fluid is suspended, the control plate 230 is not moved away from the outlet 220 because the biasing spring 255 cannot provide a force greater than the force provided on the other side of the plate 230 due to the pressure differential. Further, the vane 310 remains pressed against the end 430 of the pipe 410,420 such that the pressure release valve remains closed.

When this occurs, and the supply of compressed fluid is reinstated, the control plate 230 does not rotate correctly due to friction between it and the base 216 of the apparatus 200, and the vane 310 does not pivot from its at-rest position to its activated position. Accordingly the control plate 230 is not rotated and the fluid is directed to the same outlet as previously (i.e. outlet 220C).

It is therefore necessary to reduce the pressure within the apparatus 200 during the period that the supply of compressed fluid is ceased or suspended.

One way of achieving this is via the small hole 415 provided in the pipe 410. Although open at all times, and thus allowing pressurised fluid from within the apparatus to leak out and thus reduce the pressure within the apparatus, the hole has a selected size such that when the compressed fluid is supplied to the apparatus it does not unduly affect the operation of the apparatus (i.e. that a pressure differential of sufficient magnitude is not created across the vane 310 to effect movement of it and thus rotation of the control plate 230). However, when the supply of compressed fluid is halted, the pressure within the apparatus 200 gradually reduces via this hole 415. When the pressure differential across the vane 310 reduces below a threshold value the force provided by the spring 360 overcomes this force and thus moves the vane away from the end of the pipe thus opening the pressure release valve. As the valve opens the pressure within the apparatus is more quickly reduced thus reducing the pressure differential across the control plate 230 allowing it to be moved away from the outlets 220 by means of spring 255. The extension arm 330 also moves back to its at-rest, initial, position so that when the supply is reconnected it will move again and index the control plate 230 around axis 250.

The hole 415 may be provided in other locations as well as, or instead of, in the pipe 410. For instance, the hole could be provided in the external wall 215, 216 or the inlet 210 of the apparatus, or it could be provided in the supply conduit upstream of the apparatus 200.

Another possibility is that rather than a hole 415, the seal between the end of the pipe 420 and the vane 310 is made to be imperfect. The seal may be provided by an o-ring and this may be made imperfect to allow a slow leakage of compressed fluid from within the apparatus 200.

The hole 415 may fluidly connect the inside of the apparatus 200 with the ambient atmosphere outside the apparatus 200. However, it is possible that instead the hole connects the inside of the apparatus with a separate chamber (not shown) which is connected to the outlet of the pressure release valve, and has its own valve connecting it to the ambient atmosphere. In this way, as the pressurised fluid leaks through the hole 415 into the chamber the pressure differential across the vane 310 decreases more quickly because, if the chamber's valve is closed, the pressure within the chamber rises at the same time as the pressure within the apparatus 200 falls. Once the pressure differential across the vane 310 is below a threshold value the spring 360 opens the pressure release valve (i.e. it moves the vane 310 away from the end of the pipe 410) and it also opens the chamber's valve, such that pressurised fluid within the apparatus 200 flows to the atmosphere via the chamber.

Although the vane 310 has been described as being associated with a pressure release valve in that it seals against the end of the pipe 410, it is also possible that there is a separate pressure release valve and that the vane 310 merely acts to effect rotation of the control member 230. Of course, it is also contemplated, that two or more pressure release valves are provided, one of which may be associated directly with the vane 310.

Although a vane 310 has been described for actuating the activator member (extension arm 330 and extension leg 340) and thus providing rotation of the control member 260, other ways of achieving this are possible. For instance, a diaphragm, or piston could be employed.

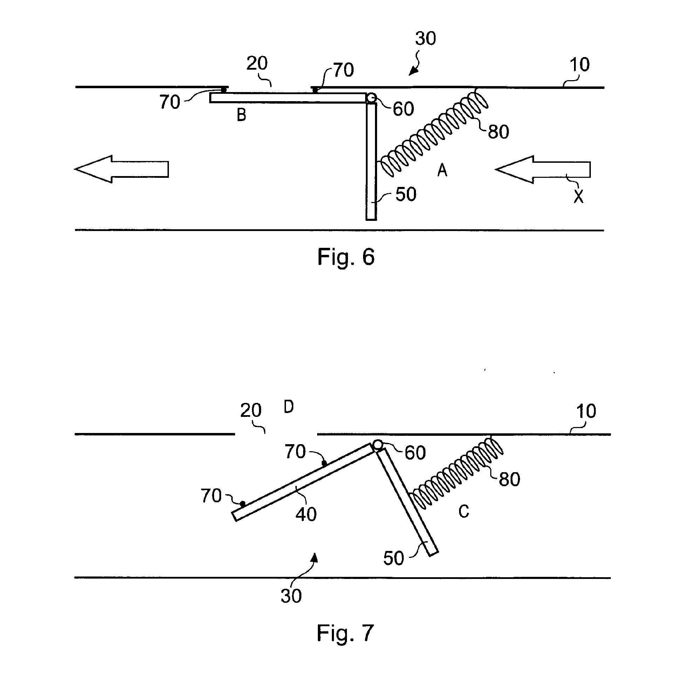

In Figure 6, another pressure release valve, generally indicated 30, is shown in a conduit 10. The conduit 10 is connected to a source of compressed fluid (not shown) at its inlet end such that the fluid flows, as indicated by reference "X", towards the outlet end. The valve 30 has a vane 50 and a sealing element 40 connected at right angles to one another, and hinged relative to the conduit at hinge point 60. In this embodiment, the vane takes the form of a flat plate-like structure positioned such that its major plane lies substantially orthogonal to the longitudinal axis of the conduit. The area of the major surface of the vane may be equal to or less than the cross-sectional area of the conduit as measured in the plane in which the vane lies. If the area is equal to the cross-sectional area of the conduit then holes may be provided within the vane to allow the compressed fluid to pass through it. Alternatively, if the area of the vane is less than the internal cross-sectional area of the conduit 10 then the compressed fluid may pass around the vane. The sealing element may take the form of a plate-like structure, however, it may have to be shaped so that it may be positioned close against the side of the conduit 10 when in the sealing position. The movement of the vane 50 is biased by a spring 80. In the Figure, the pressure of the fluid at the inlet end of the conduit 10, indicated "A", is greater than the pressure at the entrance to the orifice 20, indicated "B"(with the orifice unobstructed), such that pressure differential is provide across the vane 50. A force is thus applied to the vane 50 such that it moves into the position shown in Figure 6. The sealing element 40 has thus also moved towards the orifice 20 provided in the conduit 10. An o-ring seal 70 is provided on one surface of the sealing element 40. This o-ring 70 improves the efficiency of the seal provided by the sealing element 40. In the position, as shown in Figure 6, the pressure relief valve 30 is closed so that substantially no compressed fluid may pass from within the conduit 10 to the outside of the conduit via orifice 20.

With the orifice 20 occluded by the sealing element 40 the pressure within the conduit 10 increases so that a pressure differential is created across the sealing element 40 between the conduit side and the outside. This provides a force on the element 40 holding it closed against the orifice 20. A pressure differential also still exists across the vane 50, assuming that the outlet of the conduit 10 is not blocked. When the inflow of pressurised fluid is halted, the pressure within the conduit across the vane 50 equalises. However, there is still a pressure differential across the element 40 due to the difference in pressure between the inside of the conduit 10 and the outside of the conduit. Accordingly, a force, proportional to the difference in pressure acting on the area of the orifice is applied to the sealing element and maintains it in the closed position. If the force applied to the sealing element 20 is greater than the force applied to the vane 50 by the spring 80 then the sealing element 40 will remain closed. However, if the force applied by the spring 80 is greater than the force applied to the sealing element 40 then the vane 50 will be moved in an anti-clockwise direction around hinge point 60, as shown in Figure 7, such that sealing element 40 is moved away from the orifice 20. When this occurs, the pressure within the conduit 10 will tend to equalise with the ambient pressure outside the conduit.

To reduce the pressure differential across the sealing element 40 a hole (not shown) in the conduit, or an imperfection created in the seal 70 could be provided in a similar manner as discussed above with regard to Figures 1, 3 and 4.

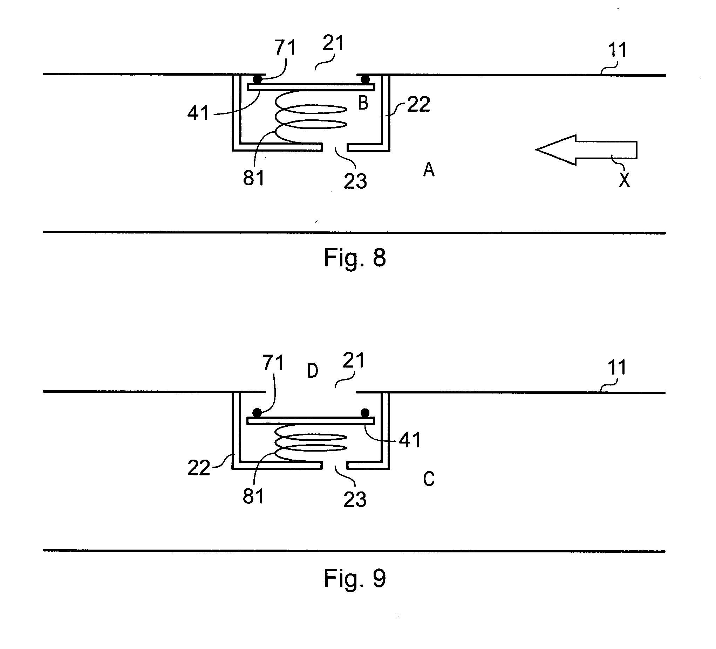

Another, alternative, embodiment of a pressure release valve is shown in Figures 8 and 9. It works in a similar manner to the valve described above in relation to Figures 6 and 7. However, rather than the sealing element 41 pivoting about a hinge, it slides within a housing 22. The element 41 is biased to the open position by spring 81. An aperture 23 is provided in the housing 22 to allow fluid to pass through the housing 22 and out of the orifice 21 in the external wall of the conduit 11. When the pressure differential between points "C" (inside the conduit 11) and "D" (outside the orifice 21) is greater than a threshold value the sealing element 41 closes, as shown in Figure 8. When the pressure differential is lower than a threshold value (not necessarily the same as the value discussed above) the element 41 opens, as shown in Figure 9. A seal in the form of, for example, an o-ring 71 is provided to better seal the element 41 against the orifice 21. This o-ring may be attached to the sealing element 41 or to the wall of the conduit 11. Again, a hole for gradually reducing the pressure differential across the element 41 is provided but not shown.

Other ways of implementing a pressure release valve are of course possible, such as by the use of a piston.

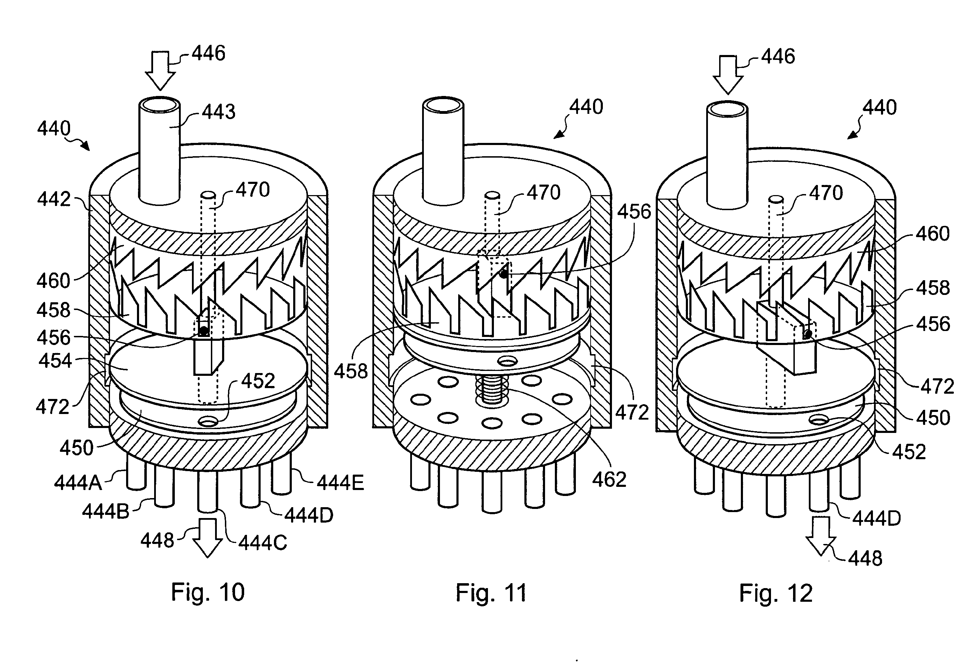

Figures 10 to 12 show cut-away perspective views of an alternative embodiment of the fluid distribution apparatus 440. The apparatus 440 has an inlet 443 and a plurality of outlets 444A,B,C,D,E. Within the housing 442 two sets of opposing cams, or teeth, 458, 460 are provided fixed relative to the housing. On the outlet side of these two sets of teeth 458, 456 a pressure plate 454 is provided. This is rotationally and slidably fixed about axis 470. The pressure plate 454 acts as a piston. A cam follower 456 is fixed to the pressure plate 454. This cam follower 456 engages with the two sets of teeth or cams 458, 460. Between the pressure plate 454 and the outlets 444 a control plate 450 is provided with an aperture 452. This control plate 450 is also rotationally and slidably fixed to axis 470 and is axially spaced from and fixed rotationally to pressure plate 454 and cam follower 456.

In Figure 10 the cam follower 456 is shown in a position between two adjacent teeth on one of the sets of teeth 458. The pressure plate 454 is forced towards the outlets 444 due to the pressure differential across it (because the inlet 443 will have a higher pressure than the outlet 444) due to the supply/flow of compressed fluid 446. In this manner, compressed fluid enters the apparatus 440 via the inlet 443 and travels past the two sets of teeth 458, 460 around the pressure plate 454 via a channel 472 in the housing 442 and out of the outlet 444C via aperture 452.

With reference to Figure 11, when the supply of compressed fluid is suspended, the biasing means 462 urges the control plate 450 away from the outlets 444 due to a reduction in the pressure differential across it. This also urges the pressure plate 454 towards the two sets of teeth 458, 460. Further, the cam follower 456 is urged towards the set of teeth 460 on the inlet side of the apparatus 440. Due to the configuration of the teeth, or cams 460, the cam follower 456 is rotated as it moves towards the inlet end of the apparatus 440.

Referring to Figure 12, when the supply of compressed fluid, 446 is reinstated to the apparatus 440, the pressure plate 454 is urged towards the outlet 444 due to the pressure differential created between the inlet 446 and the outlet 444. This movement urges the cam follower 456 towards the outlets 444. As the cam follower 456 moves towards the outlet 444 it meets the set of teeth 458 on the outlet side of the apparatus 440. Due to the nature and configuration of this set of teeth 458 the cam follower 456 is further rotated in the same direction as before. This rotation is translated to the pressure plate 454 (although this is not necessary) and the control plate 450 such that the aperture 452 is indexed around to the next outlet 444D.

The repeated supply and cessation of the supply of compressed fluid to the apparatus 440 thus advances the cam follower 456 around axis 470 and thus rotates the control plate 450 and aperture 452 around the axis so that the compressed fluid is sequentially supplied to each outlet in turn.

Although the teeth or cams 458,460 are described as rotationally fixed and the cam follower 456 is described as able to rotate relative to the teeth, the opposite could have equal effect.

The apparatus 440 may be used in conjunction with any of the pressure release valves described above to reduce the pressure differential across the pressure plate 454 such that correct operation and sequential directing of fluid to each outlet in turn is effected.

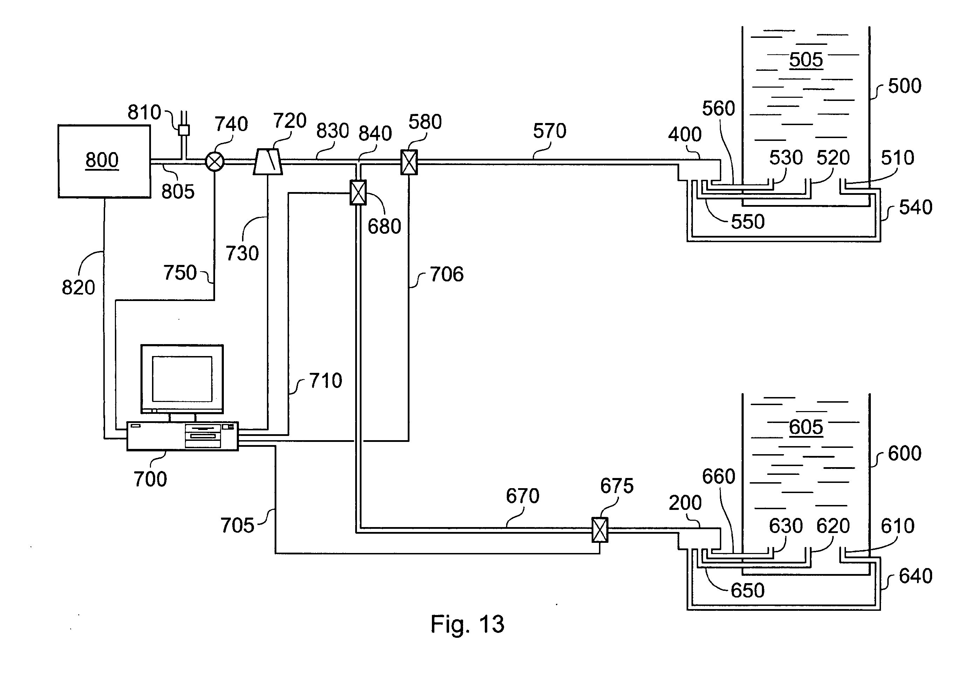

To better understand the use of the pressure release valve, the fluid distribution apparatus and the slurry agitation apparatus reference will now be made to Figure 13. Two slurry tanks are provided 500, 600 containing slurry 505, 605 respectively. At the base of each tank three outlet pipes 510, 520, 530 and 610, 620, 630 respectively are provided. These outlets may included "duck-bill" non-return valves at their ends. Each of these outlets are connected via pipes 540, 550, 560 and 640, 650, 660 to fluid distribution apparatus 400, 200. These fluid distribution apparatus 400, 200 are connected to a single compressor 800. The fluid distribution apparatus 400, 200 may be located above the base of the tanks 500, 600 to prevent back-flow. They may be located at any height relative to the tanks and preferably above the maximum height of the upper surface of the stored slurry.

From the compressor 800, compressed gas is supplied via a non-return valve (not shown) in pipe 805 to a master valve 740 and then to a flow sensor 720. From the flow sensor 720 the compressed gas travels along pipe 830 to a junction 840 where it is split between two pipes 570, 670. The first pipe 570 connects to fluid distribution apparatus 400 in conjunction with the first tank and the second pipe 670 is connected to the second fluid distribution apparatus 200. Valves 580, 680 are provided in each pipe 570, 670 between the junction 840 and the fluid distribution apparatus 400, 200. These valves, which may be solenoid valves, may be operated so that compressed gas flows down either pipe 570 to the first fluid distribution apparatus 400 or to the second fluid distribution apparatus 200 via pipe 670.

A pressure relief valve 810 is provided within pipe 805 adjacent to the compressor 800. This may be a safety device for venting any compressed gas directly to atmosphere in case of any unusual events downstream and to protect the equipment from very high pressures. Alternatively, and/or additionally, the valve 810 could supply the fluid back to the compressor 800.

A PCU 700 may be provided which is electrically connected to the compressor 800 via cable 820, the master valve 740 via cable 750, the flow sensor 720 via cable 730, the first solenoid valve 580 via cable 706, the second solenoid valve 680 via cable 710, and a pressure release valve 675 located in pipe 670 via cable 705.

In operation, the compressor provides compressed gas to the system. Master valve 740 is opened together with solenoid valve 580. However, solenoid valve 680 is closed such that compressed gas will only flow to the first fluid distribution apparatus 400 and the first tank 500. The compressed gas flows into the fluid distribution apparatus 400 via the inlet and passes through it and out whichever of the outlets with which the aperture in the control plate is aligned. Gas will then bubble from the outlet at the bottom of the tank 500 and rise to the surface of the slurry 505 providing agitation thereof.

The PCU 700 will record or log the fact that there is gas flowing through pipe 830 by means of flow sensor 720.

After a predetermined time interval, PCU 700 will close master valve 740 or solenoid valve 580. Accordingly, compressed gas will cease to flow through the system and to the tank 500. Gas pressure within the fluid distribution apparatus 400 will equalise on either side of the vane 310 (refer to Figure 1) such that the vane will rotate clockwise as the extension arm 330 is pulled back by the spring 360 to the biased position. In this manner, the pressure release valve will open and the pressure within the system will equalise with the ambient atmospheric pressure outside. The PCU 700 will then close solenoid valve 580, if not already closed, and open solenoid valve 680 and master valve 740 such that compressed gas is then supplied to the second tank 600 via the second fluid distribution apparatus 200. Compressed gas will flow through the fluid distribution apparatus 200 and into the base of the tank 600 via whichever outlet is connected. Compressed gas will then bubble through the slurry towards the surface providing agitation therein.

PCU 700 will log/record a "flow situation" by means of flow sensor 720. After a predetermined time interval, PCU 700 will close solenoid valve 680 and open solenoid valve 580 such that compressed gas is directed back towards the first tank 500 and is ceased to be supplied to the second tank 600.

Fluid distribution apparatus 200 does not include a pressure release valve within its housing. However, a pressure release valve is provided at point 675 in the supply conduit 670. This pressure release valve 675 may take the form of a solenoid valve controlled by the PCU or alternatively could be a pressure release valve which is activated by means of a variation in pressure differential across it, as described above.

With regard to the second tank 600, pressure within the fluid distribution apparatus 200 will equalise on either side of the vane 310 such that the vane 310 is moved back to its biased position by spring 360. This will reset the extension leg 340 behind the next adjacent tooth 270 on drive member 260 ready for rotation of the control plate 230 at the next influx of compressed gas. However, if necessary, it is possible to gradually reduce the pressure within the apparatus 200 by means of a hole 415 so that the pressure differential across the vane 310 reduces below a threshold value so that the pressure release valve 675 is opened by means of the biasing spring 360. If the pressure release valve 675 takes the form of a solenoid valve then it will be operated by PCU 700 via control line 705. Alternatively, if the pressure release valve 675 takes the form as shown in any of Figures 1, 4, 5 and 6 to 9, then the equalisation of pressure within the conduit 670 on either side of the vane 50, 150 will allow the sealing element to move under the force of the biasing spring 80, 81, 180 such that the orifice 20, 21, 120 is in fluid connection with the inside of the conduit and compressed gas may vent to atmosphere.

If the pressure within the apparatus 400 is much greater than the pressure of the ambient atmospheric pressure outside of the apparatus then there will be a pressure differential across the orifice 430 of the outlet pipe. In other words, there will be a low pressure inside the pipe 420 and a high pressure on the outside of the pipe in the supply conduit 210. If this occurs, then there will be a force pushing the vane 310 against the end of the pipe 420 so that even if the gas pressure equalises within the apparatus by the cessation of the supply of compressed gas, the vane 310 will remain held against the orifice 430. If this occurs then the gas pressure within the apparatus 400 will not reduce and the control plate 230 will remain pushed down, against biasing spring 255, against the outlets 200. This will prevent rotation of the control plate 230 due to the friction between it and the base 216 of the apparatus 400 and also because the vane 310 will not be moved by the influx of compressed gas so that it will not rotate the drive member 260.

To overcome this, the seal between the valve member 310 and the orifice 430 at the end of the pipe 420 may have a deliberately imperfect sealing effect. In this manner, there will be a slow leak of compressed gas via the outlet pipe 420 around this seal. Alternatively, a hole 415 may be included in the apparatus as discussed above. Accordingly, the pressure within the apparatus 400 will reduce and equalise over time with the ambient pressure outside of the apparatus 400. Once the pressure within the apparatus 400 has equalised with the ambient outside pressure, or at least reduced to such an extent that the spring overcomes the force due to the pressure differential, the vane 310 will move away from the orifice 430 and full venting of the apparatus will occur. In this manner, the control plate 230 will lift up away from the outlets ready to be rotated by the vane and the corresponding extension leg 340 at the next influx of compressed gas.

The method of alternating the opening and closing of solenoid valves 580 and 680 will ensure that the control plates 230, 450 within the fluid distribution apparatus 400, 200 is rotated so that the compressed gas is directed to each outlet in turn. However, as discussed above, each control plate 230, 450 has a blank position wherein compressed gas will not reach any outlet. When this occurs, the pressure within the system will rise and equalise across either side of the flow sensor 720 which will provide an indication to the PCU 700 of a "no-flow situation". PCU 700 is therefore able to record the fact that the relevant control plate 230 has rotated to its blank position. By analysing the results recorded by the PCU 700 over time, it is possible to ascertain whether the control plates 230 have been rotating correctly since if they have the PCU 700 will have recorded five "flow" situations followed by one "no-flow" situation, followed by five "flow" situations etc. This assumes that there are five outlets 220A,B,C,D,E and one blank spot 220F on the control plate 230, 450.

PCU 700 may provide a warning in the form of an alarm to indicate that the control plate 230, 450 is not rotating correctly so that the operator may know that the fluid distribution apparatus may need maintenance.

Such slurry agitation system are prone to blockages at the outlet due to the nature of the slurry material. When this occurs, the compressed gas may not exit from the relevant outlet pipe. In such circumstances, it is desirable to be able to attempt to unblock this blockage by means of applying continued gas pressure to the outlet. The present apparatus allows this to occur without the associated problem of creating undue high pressures within the apparatus which cannot then be relieved causing problems with rotation of the control plate.

The compressor must be able to produce pressure which is equal to or greater than that created by the weight of slurry in a full tank.

Although the seal provided around the orifice of the pressure relief valve may be deliberately made to be imperfect to allow leakage of pressure from within the apparatus, leakage may well occur from other places within the system such as at pipe joints etc.

Although the apparatus has been described with the present system for rotation of the control plate 230, 450 it is of course possible that it could be rotated by means of a piston, such as described above.

Further still, although the application is directed to the agitation of slurry, in one embodiment, it may also be directed to other areas such as the supply of water in irrigation apparatus.

In an initial condition the pressure relief valve may be open such that the pressure of fluid within the conduit is equal to the pressure of fluid outside the conduit. When compressed fluid is then supplied to the conduit the fluid pressure on the upstream side of the vane will be higher than that of the fluid pressure on the other downstream side, and at the entrance side of the orifice. Accordingly, a force will be provided on the vane due to this pressure differential. In the initial condition, the vane is biased to the open position by biasing means, such as a spring. The biasing force provided by the spring may be carefully chosen such that its biasing force will only be overcome when the pressure differential is above a threshold value. When this occurs, the vane will be moved by the force applied to it and will move to the position where the sealing element occludes the orifice in the conduit. As the pressure increases within the conduit, due to the orifice being closed, the sealing element is more firmly forced against the orifice. This force will be proportionate to the difference in pressure between that of the fluid inside the conduit and that of the fluid, or ambient atmosphere, outside the conduit, and the dimensional area of the orifice.

If the outlet end of the conduit is closed or blocked/obstructed then the pressure within the conduit will eventually stabilise, at the maximum pressure which the source of compressed fluid can achieve, so that there is no pressure differential between the two sides of the vane. Accordingly, the only force then applied to the sealing element will be that due to the pressure differential between the pressure within the conduit and the pressure outside the orifice, as discussed above. The biasing means may be selected so that the biasing force provided by it is greater than the force applied to the sealing element due to the pressure differential across the orifice so that in the absence of any force applied to the vane, the sealing element will be urged open by the biasing means. As soon as the orifice is open then the pressure within the conduit will be reduced.

By contrast, if the outlet end of the conduit is unobstructed and open to atmosphere, possibly via a body of water, then there will always be a pressure gradient between the inlet and the outlet ends of the system or conduit when the compressed fluid is supplied (flowing) to the inlet end of the conduit. This pressure gradient will ensure that a force is applied to the vane as a result of the pressure differential across it.

## Claims

1. Fluid distribution apparatus of the type in which fluid arriving at an inlet is delivered sequentially to a plurality of outlets, commutation of the delivery from one outlet to the next being effected by a pressure differential greater than a commutation threshold value provided across an activator member, in which there are provided means for reducing the pressure differential across the activator member independently of any change in the pressure within the apparatus resulting from the pressure of the fluid arriving at the inlet.

2. Apparatus according to claim 1, wherein the means for commuting the delivery of the supplied compressed fluid includes a control member turnable between successive different defined positions.

3. Apparatus according to any preceding claim, wherein the means for reducing the pressure differential across the activator member includes means for gradually reducing the pressure differential and means for varying the rate of reduction of the pressure differential.

4. Apparatus according to claim 3, wherein the means for varying the rate of reduction of the pressure differential is a pressure release valve including an orifice in an external wall of the apparatus, a pressure release member movable between a position in which it substantially occludes the orifice, and a position in which the orifice is substantially unobstructed, and biasing means for biasing the pressure release member to the unobstructed position.

5. Apparatus according to claim 4, wherein the pressure release member is movable to the occluded position when a pressure differential across the pressure release member is above an occlusion threshold value.

6. Apparatus according to either of claims 4 or 5, wherein the pressure release member is movable to the unobstructed position when the pressure differential across the pressure release member is below a release threshold value.

7. Apparatus according to any of claims 4 to 6, wherein the movement of the pressure release member to the obstructed position is effected by movement of a vane provided in the inlet and the vane is moved when the pressure differential across it is above the occlusion threshold value.

8. Apparatus according to any of claims 4 to 7, including a pipe connected to the orifice at one end and extending inside the apparatus, wherein the pressure release member is engageable with the free end of the pipe within the apparatus thereby substantially to occlude it.

9. Apparatus according to claim 2 and any of claims 3 to 8 when directly or indirectly dependent on claim 2, including a set of teeth, wherein the control member is incrementally turned by engagement of the activator member with the teeth.

10. Apparatus according to claim 2 or any of claims 3 to 8 when dependent directly or indirectly on claim 2, including two sets of opposing cams and a cam follower, wherein the control member is incrementally turned by relative motion between the two sets of opposing cams and cam follower.

11. Apparatus according to claim 2 or any of claims 3 to 10 when dependent directly or indirectly on claim 2, including means for preventing the fluid reaching any of the outlets at least once per revolution of the control member.

12. Apparatus according to any preceding claim, wherein the rate of reduction of the pressure differential across the activator member is adjustable.

13. Slurry agitation apparatus comprising a source of compressed gas, fluid distribution apparatus according to any of claims 1 to 12, means for connecting the source of compressed gas to the fluid distribution apparatus, and means for varying the pressure of the supplied compressed gas, wherein the outlets from the fluid distribution apparatus are connectable to a plurality of inlets in a slurry tank so that, in use, the fluid distribution apparatus commutes the delivery of the compressed gas, upon each such variation in gas pressure between two threshold values, from one inlet to another, for agitation of the slurry in the slurry tank.

14. A method of operating a fluid distribution apparatus of the type in which fluid arriving at an inlet is delivered sequentially to a plurality of outlets, commutation of the delivery from one outlet to the next being effected by a pressure differential provided across an activator member greater than a commutation threshold value, comprising the steps of :
a) supplying fluid to the apparatus via the inlet so as to increase the pressure differential across the activator member above the commutation threshold value so that the fluid is directed to at least one first outlet;
b) temporarily suspending the supply of fluid to the inlet;
c) reducing the pressure differential across the activator member independently of any change in pressure within the apparatus resulting from the temporary suspense of the supply of fluid to the inlet to allow it fall below a reset threshold value; and
d) ending the temporary suspense of the supply of fluid to the apparatus via the inlet so as to increase the pressure differential across the activator member above the commutation threshold value so that the fluid is directed to at least one second outlet.

15. A method according to claim 14, wherein step c) is effected by gradually reducing the pressure differential across a pressure release member below a release threshold value so that a pressure release valve is opened thereby varying the rate of reduction of the pressure differential across the activator member.

16. A method of maintaining slurry in suspension in a slurry tank by means of slurry agitation apparatus according to claim 13, the apparatus being operated in accordance with claim 14.
